Europäisches Patentamt

European Patent Office

Office européen des brevets

(19)

(11) **EP 1 045 345 A1**

(12) **EUROPEAN PATENT APPLICATION**

(43) Date of publication:
**18.10.2000 Bulletin 2000/42**

(51) Int Cl.⁷: **G06T 17/50**

(21) Application number: **99107016.0**

(22) Date of filing: **13.04.1999**

| | |
|---|---|
| (84) Designated Contracting States:<br>**AT BE CH CY DE DK ES FI FR GB GR IE IT LI LU MC NL PT SE**<br>Designated Extension States:<br>**AL LT LV MK RO SI**<br><br>(71) Applicant: **IDC LTD.**<br>**Sandy Mount, Dublin (IE)** | (72) Inventor: **Di Camillo, Andrea**<br>**00196 Roma (IT)**<br><br>(74) Representative: **Sarpi, Maurizio**<br>**Studio FERRARIO**<br>**Via Collina, 36**<br>**00187 Roma (IT)** |

(54) **Navigation system display of search engine retrieved data selected according to user-given geographical criteria**

(57)    A method of looking up data banks by one or more search engines and its selection according to information provided by the user, characterized in that there are provided in combination the use of one or more data banks containing records relative to commercial concerns and/or services, and a vectorial topographical map provided with georeferences and interfaced with said data banks to carry out searches in said data banks according to data items input by the user and/or the distance from a geographic position either input by the same user or automatically detected, each record of said data banks being provided with geographic references able to determine the position all over land.

Data base may be looked up by personal computers, remote terminals, cellular telephones, etc.

FIG. 12

EP 1 045 345 A1

**Description**

The present invention relates to a method of selecting automatically data contained in one or more data banks according to information provided by the user and as a function of the distance from a geographic point mentioned by the same, and displaying the position on geographic maps provided with georeferences as well as hypertext links.

This invention originates from the need of supplying the user with an easy and rapid means for obtaining information from a data bank of data items provided with georeferences, i.e. characterized by information relative to their absolute positions (e.g. latitude and longitude), as regards commercial concerns and/or services.

Nowadays the search of a commercial concern over land is typically carried out through a long multistep procedure: the user first looks up the section of a catalogue listing the commercial concerns belonging to the desired category after having looked at the category index of specific publications (by way of example Yellow Pages); he looks up then the proper pages one after the other looking for the concerns that satisfy his needs; thereafter, he must note the address of all of the commercial concerns of interest and look up a suitable publication containing all topographical maps of the area where those concerns are located. All of the above is time consuming and may cause problems in quickly focusing the location of the desired commercial concerns and services.

The present invention seeks to allow the user to quickly obtain a list of items that satisfy the condition requested by using suitable editing masks, said items being arranged according to the geographic distance from a starting point stated by the user.

The invention relates to a system of search engines capable of giving the user information regarding commercial concerns and services (museums, government offices, etc.) with the aid of a vectorial topographical map provided with georeferences and interfaced to such engines on the base of a fundamental parameter, i.e. the distance within which the user likes to find the items requested.

Advantageously, the present invention allows a vectorial topographical map of the area concerned to be displayed, with the selected item shown by a suitable symbol being at its centre, and associates to the latter a detailed information sheet or an entire hypertext/multimedial section (introduction, catalogue of products, etc.) by means of hypertext links.

The search may also be carried out by selecting only the categories of marketable goods of interest, the trade name or a combination of both (e.g. the user may search the commercial concerns selling shoes of brand XY).

A further advantage consists of the fact that data banks may be looked up from a place far away therefrom. In the following implementation the look-up terminal is an ordinary personal computer connected via Internet to the host system, however, also telematic "kiosks" located in the area concerned, cellular phones, vehicle navigation system may also be used as look-up terminals.

A better understanding of the invention will ensue from the following detailed description with reference to the accompanying drawings that shows a preferred embodiment of the editing masks and block diagrams of the search engines only by way of a not limiting example.

In the drawings:

Figure 1 is a diagram of the look-up window in case of a terminal with graphic interface;

Figure 2 shows a display of the search by name;

Figures 3, 4 and 5 relate to displays of the search by vicinity;

Figures 6, 7 and 8 are displays relative to the standard search;

Figures 9 and 10 are displays of the fast search;

Figure 11 is a block diagram of the distance control procedure;

Figure 12 is a block diagram of the standard search engine;

Figure 13 is a block diagram of the fast search engine;

Figure 14 is a block diagram of the search engine by name, trade name or article;

Figure 15 is a block diagram of the search engine by vicinity;

Figures 16 to 30 show several menus that appear on the display of a cellular phone during the search by categories;

Figures 31 to 38 show several menus that appear on the display of a cellular phone during the search by shows;

In the embodiment disclosed there are six different search engines that query two data base having different contents, one of the commercial type with one table for each commercial category, and one of the service type having a number of tables too.

When using such a structure the user may look at one or both data base without needing a different engine each time.

In order to make the waiting time of the user shorter, each query involves not more than one hundred elements distributed in pages, ten element per page, so that the amount of transferred data is very low.

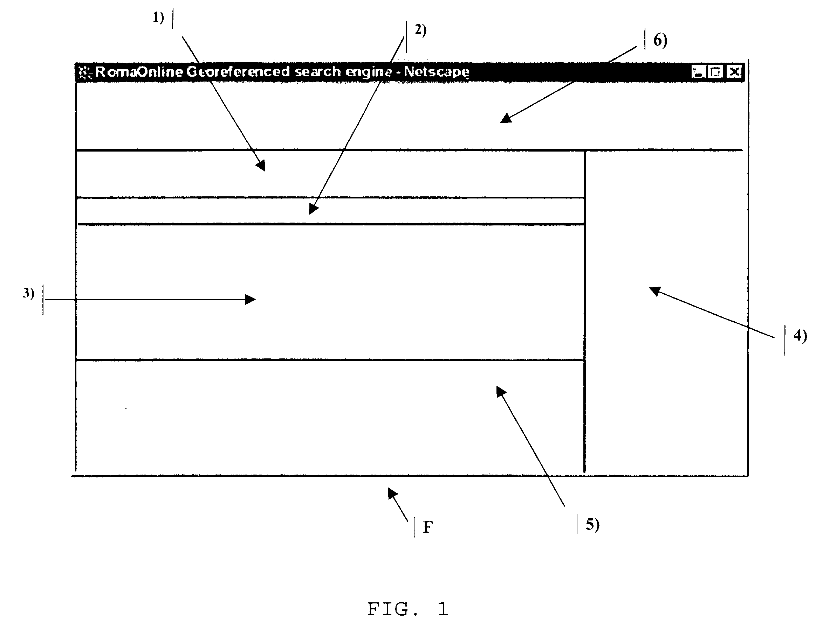

With reference to Figure 1, six main sections are included in window F of the search engines and designated by the following reference numerals:

- section of the engine to be used, field 1;
- section of the data base for the query, field 2;
- section of the selected engine, field 3;
- help section, field 4, for the instructions of the actual selected engine;
- section for the introduction of the result, field 5;
- section for the advertising banners, field 6.

Window F has preferably a size of 650x300 pixel. Thus, it is possible to open the engine and to see the vectorial map on the background changing according to query.

In the present embodiment, the search engines have been developed in PHP interpretive language, version 3. All of the sources that are interpreted on looking up by a proper module of HTTP server reside in the computer that hosts the Web site by which the looking-up of the search engines takes place.

Such computer is preferably a system based upon hardware Intel Pentium-II with operative system Linux and "Apache" HTTP server.

The data base server resides in a separate computer connected to the former over a local net. Such computer is preferably a multiprocessor system based upon hardware Intel Pentium-II with operative system Microsoft Windows NT 4.0. The software used in the data base server is Microsoft SQL Server 6.5, which is the same computer that hosts the server system for the vectorial map, i.e. the product Autodesk MapGuide Server 3.0.

While the connection for data exchange among the search engines (PHP sources) and data base is established by interface libraries (API) in C language, the connection among the vectorial maps and data base is established by ODBC (Open Data Base Connection) technology by means of driver and libraries provided by the same Microsoft with the product SQL Server.

Multicolumn indexes have been implemented in the tables forming the two (commercial and service) data base so that the efficiency of the several queries both from engines and the map is increased.

The data base records also include geographic references relative to their positions all over land. It should be appreciated that such geographic references are geographic co-ordinates (latitude and longitude) and/or street addresses which can be led to geographic co-ordinates by known mathematical calculations.

According to the present invention the distance from the geographic position stated by the user or acquired automatically can be advantageously expressed as actual distance to be covered or distance as the crow flies or maximum radius.

A plurality of search engines will be described herebelow.

The presently used engines are:

- search engine by name with and without distance restraint (maximum radius);
- search engine by trade names with and without maximum radius restraint;
- search engine by articles with and without maximum radius restraint;
- search engine by vicinity;
- standard search engine;
- fast search engine.

The search by name as well as trade names and articles allows any item of both data base to be found by searching any sub-string (group of characters) in the name of that item (commercial concerns or service) and in the fields containing the trade names and the articles in question, respectively.

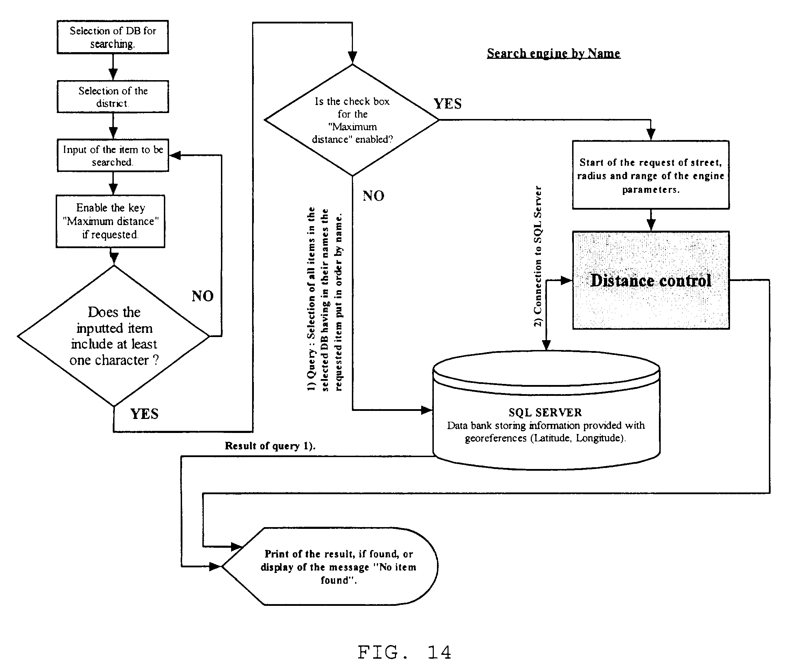

There are two different modes of operation for such search engine diagrammatically shown in the flow chart of Figure 14: one mode requiring the definition of a starting point and a maximum radius within which the search has to be carried out, and another mode concerning a search by name all over the items put in order by names.

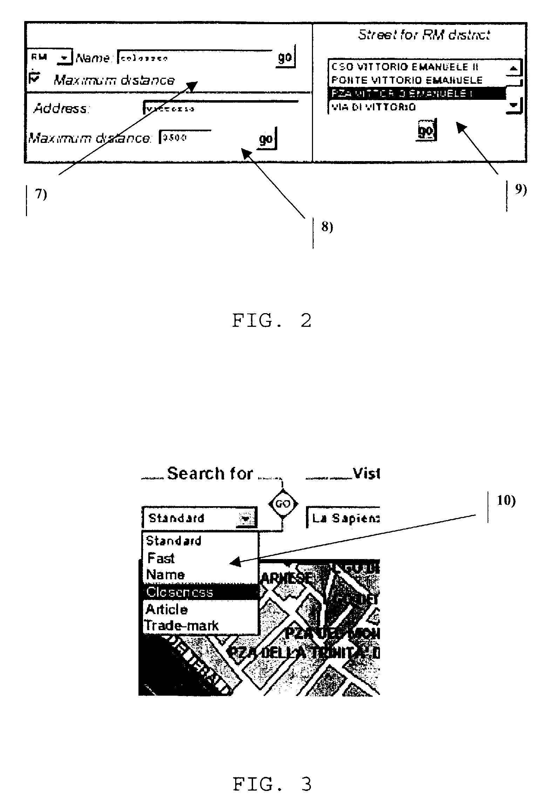

With reference to Figure 2, the procedure of searching by name without restraint of maximum radius consists of the following steps:

I. Selecting the data base in which the search has to be carried out among three possibilities: SERVICES-COMMERCIAL-BOTH (by default the selection is always "BOTH");
II. Selecting the district: only the district with at least one item are displayed;
III. Digiting the alphanumeric string to be sought in field 7 and clicking "go" (in case no character has been digited a fault message appears requiring that at least one character is digited);
IV. The results put in order by names appear at the lower side of the display and include main features of the item sought, link to any Internet site, map showing the geographic position of the item in case such a position is mapped, and buttons to scroll the pages;
V. Digiting a new item and clicking "go" for a new search by the same engine.

The procedure of searching by name with the restraint of maximum radius is the same as the former as far as the first two steps is concerned. The continuation is as follows:

III. Digiting the alphanumeric string to be sought in field 7 and clicking "go" (in case no character has been digited a fault message appears requiring that at least one character is digited);
IV. Writing the starting street and the radius within which the items have to be sought in field 8 (by default such radius is 500 metres) and clicking "go" (in case no street has been digited a fault message appears requiring such information);
V. In case the digited street or topographical name is not enough precise and corresponds to several other sites, all of the latter are listed in a pull-down menu 9 with the request of selecting the correct starting point and clicking "go";
VI. The results put in order by distances from the starting point appear at the lower side of the display and include main features of the item sought, link to any Internet site, map showing the geographic position of the item in case such a position is mapped, and buttons to scroll the pages;
VII. Repeating the steps from step III to carry out a new search.

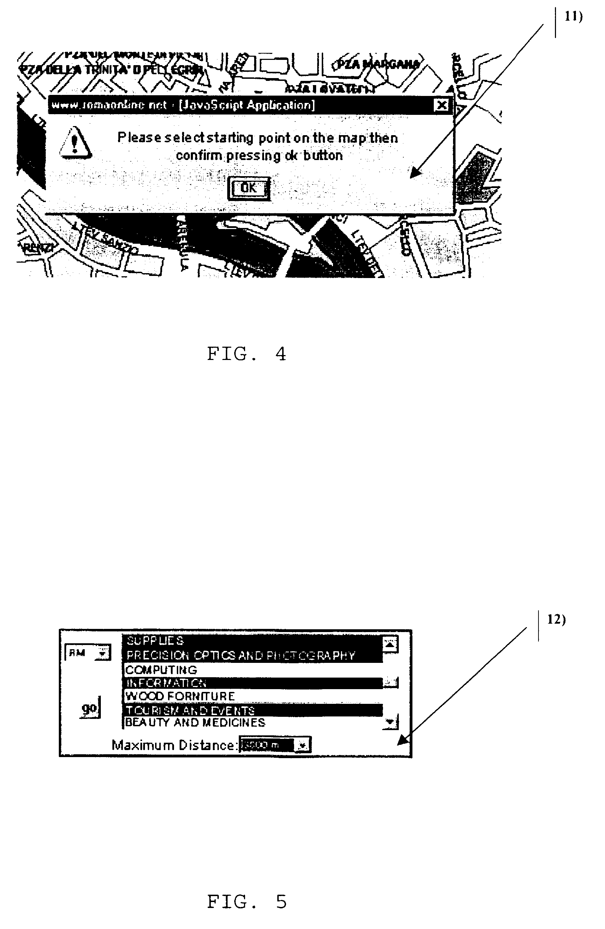

The search by vicinity shown in Figures 3, 4, and 5 allows items of Commercial and Service data base to be sought according to the (commercial or service) category of belonging.
Unlike the other engines in which the starting point is written by digiting the name of the street and then taking the geographic position of the centroid of the selected street, in the present case the starting point is advantageously "pointed" directly at the maps (for example, by mouse). Thus, the interaction between search engine and map is not only the final output by which the sought item is displayed but the map is also used as first input to carry out the search. This means that the user has the chance of selecting the starting point with the maximum precision by interacting directly with the map.
The procedure of searching by vicinity includes the following steps:

I. Opening the map section from the home page of the remote link;
II. Positioning in the area where the starting point of the search is located;
III. Selecting "vicinity" from section 10 "search by" and clicking "go";
IV. Selecting the starting point of the search on the map after appearance of message 11 requiring the selection of that point;
V. Appearance of the page containing the search engines with the already started section of search by vicinity;
VI. Selecting the data base in which the search has to be carried out among three possibilities: SERVICES-COMMERCIAL-BOTH (by default the selection is always "BOTH");
VII. Selecting the district (only districts having at least one item are displayed);
VIII. Selecting the maximum radius within which the search has to be carried out in section 12, selecting at least one category and not more than ten, and clicking "go";
IX. The results put in order by distances from the introduced starting point appear at the lower side of the display and include main features of the item sought, link to any Internet site, map showing the geographic position of the item in case such a position is mapped, and buttons to scroll the pages;
X. Re-starting from point III for a new search.

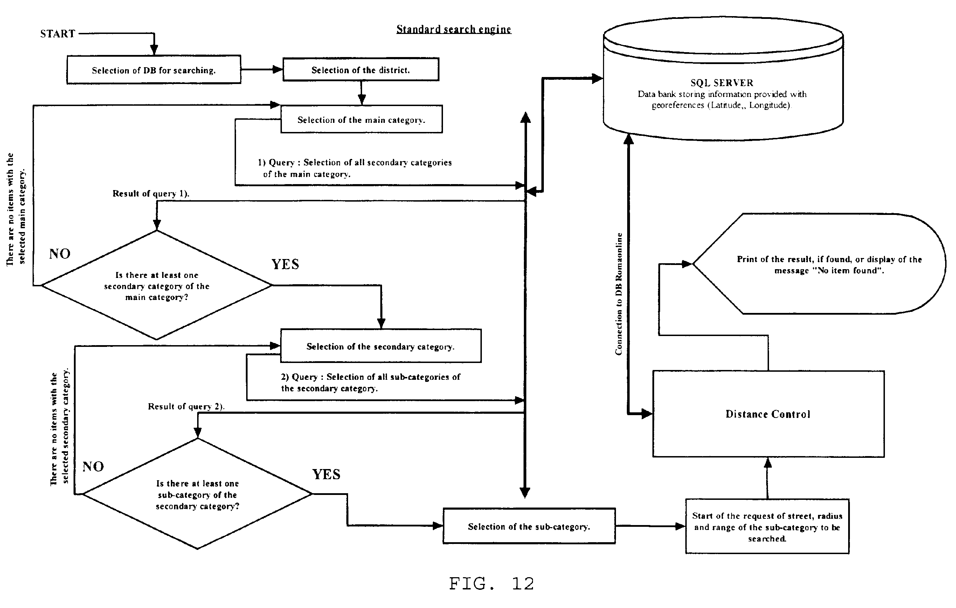

The standard search whose search engine is diagrammatically shown in the flow chart of Figure 12 allows data items in the Commercial or Service categories of belonging to be sought. The search by category is present in two engines, Standard and Fast engines, using, however, two different approaches that make such engines independent.

The approach of such a search mode is to known a priori where to go searching the information of interest. In other words, it is necessary to know already the category of belonging.

For example, looking for a pizza-shop requires the knowledge that the pizzerias are in the main category "Entertainment and Tourism", the secondary category "Hotels, Restaurants and Bars", and the sub-category "Pizzerias".

Such a search mode is also referred to as "Filter" mode because the general information is progressively filtered until an information limited to the sole category of items to be sought is obtained.

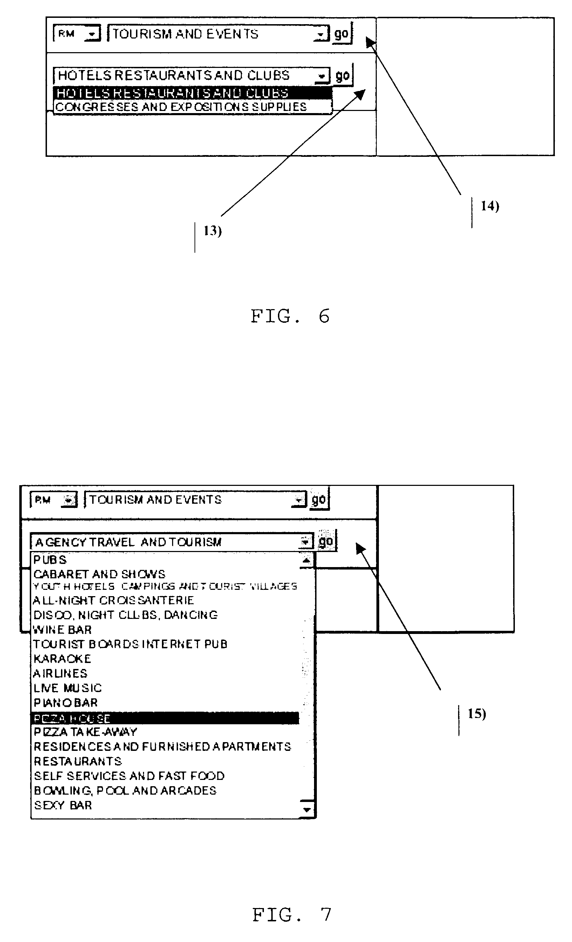

The standard search shown in Figures 6, 7, and 8 is carried out as follows:

I. Selecting the data base in which the search has to be carried out among three possibilities: SERVICES-COMMERCIAL-BOTH (by default the selection is always "BOTH") ;

II. Selecting the district: only the district with at least one item are displayed;

III. Selecting the main category in which the item has to be sought in the first pull-down menu 14 and clicking "go";

IV. Selecting one heading in the further pull-down menu 13 including all of the secondary categories belonging to the selected main category (in case there is no secondary category, a fault message is shown and the program return to step III), and clicking "go";

V. Selecting one heading of the new pull-down menu 15 including the sub-categories of the selected secondary category (in case there is no secondary category, a fault message is shown and the program return to step IV), and clicking "go";

VI. Writing the starting street and the radius in which the items of interest have to be sought in window 16 because the information is now filtered up to the category of interest (by default, the distance is 500 metres and in case no street is written a fault message advises the user to write it) and clicking "go";

VII. In case the digited street or topographical name is not enough precise and corresponds to several other sites, all of the latter are listed in a pull-down menu 17 with the request of selecting the correct starting street and clicking "go";

VIII.The results put in order by distances from the written starting point appear at the lower side of the display and include main features of the item sought, link to any Internet site, map showing the geographic position of the item in case such a position is mapped, and buttons to scroll the pages;

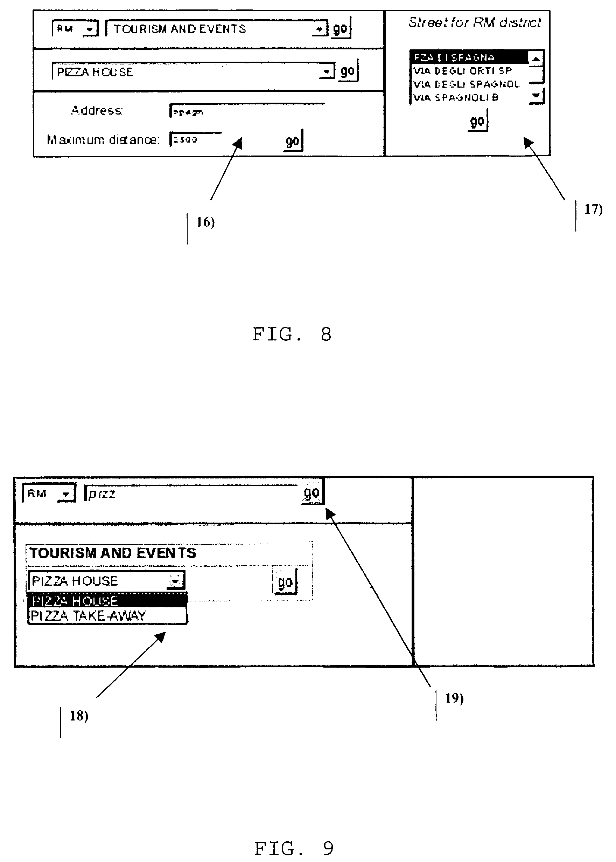

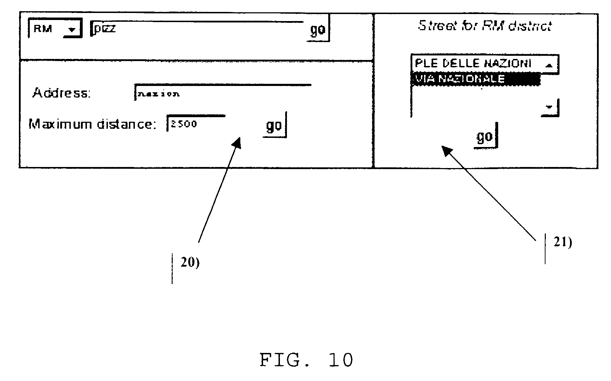

IX. Starting from step III again for a new search. The Fast search shown in Figures 9 and 10 allows data items to be sought in the Commercial or Service category of belonging.

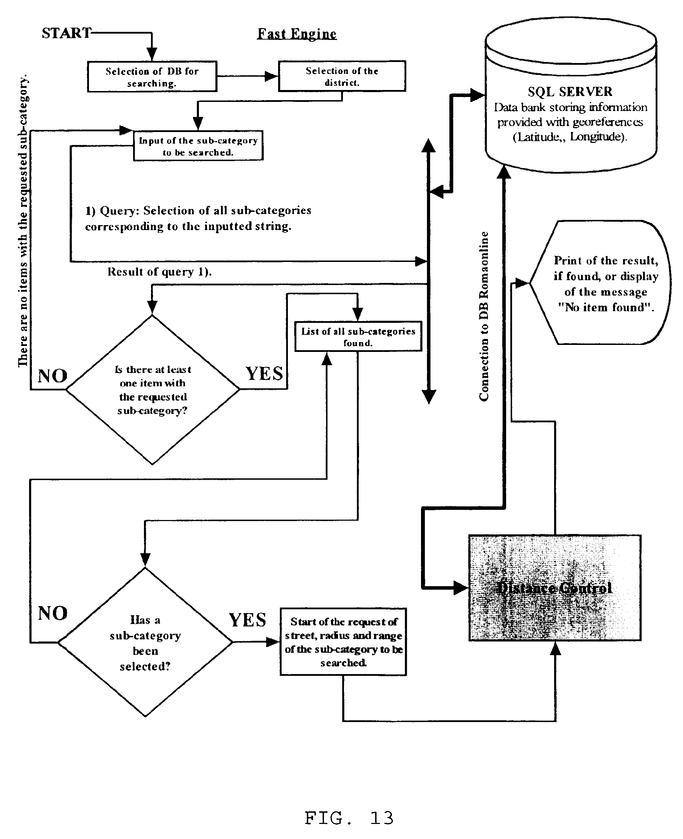

The approach of such a search mode whose engine is diagrammatically shown in the flow chart of Figure 13 is to ask directly the category of interest without knowing a priori where to go searching the information of interest.

For example, in order to search a pizzeria it is necessary to ask directly "pizzeria".

Such a search mode is also referred to as "Fast Search" because the list of the categories containing the information to be sought is immediately provided.

The procedure of such mode is as follows:

I. Selecting the data base in which the search has to be carried out among three possibilities: SERVICES-COMMERCIAL-BOTH (by default the selection is always "BOTH");

II. Selecting the district: only the district with at least one item are displayed;

III. Selecting the category(ies) in which the item has to be sought in field 19 and clicking "go" (in case there are no items under the selected category a fault message appears requiring that another category is digited);

IV. Selecting one heading among all of the sub-categories listed in pull-down menu 18 showing also the selected main category, and clicking "go";

V. Writing the starting street and the radius in which the items of interest have to be sought in window 20 (by default, the distance is 500 metres and in case no street is written a fault message appears) and clicking "go";

VI. In case the digited street or topographical name is not enough precise and corresponds to several other sites, all of the latter are listed in pull-down menu 21 with the request of selecting the correct starting street and clicking "go";

VII. The results put in order by distances from the written starting point appear at the lower side of the display and include main features of the item sought, link to any Internet site, map showing the geographic position of the item in case such a position is mapped, and buttons to scroll the pages;

VIII.Starting from step III again for a new search. The check of the radius is briefly described herebelow.

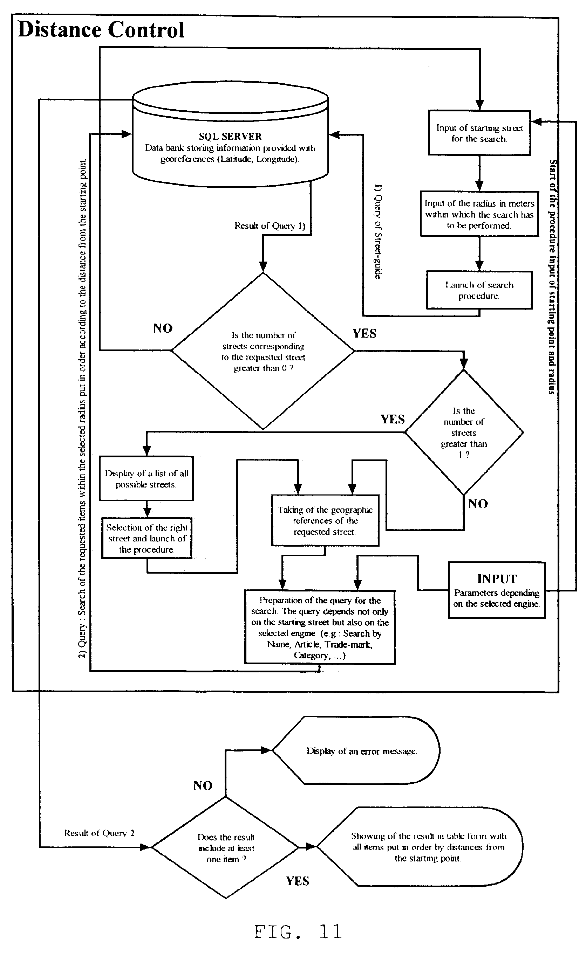

Such a procedure diagrammatically shown in Figure 11 is started after the parameters of the engines are input:

1. The script PHP "address.phtml" is executed so that the user can write street and radius transferring thereto the values strictly depending on the selected engine (such values are transferred to all of the scripts including the script for printing the results) ;

1.1 Once data is input and "go" clicked, data is sent to a new script: "address_result.phtml";

1.2 This script first checks whether at least one character has been input into proper spaces for address and maximum radius;

1.2.1 At least one character is present in both fields:

1.2.1.1 A query is executed to the table including the information of the road-map in the Database Server asking all streets having the string written in the address space of the Name field;

1.2.1.2 The query of item 1.2.1.1 gives zero items as result:

1.2.1.2.1 A fault message "Street not included in the road map" appears and program returns to step 1;

1.2.1.3 The result of query 1.2.1.1 gives a number of items greater than 1 as result (there is more than one item with the same name):

1.2.1.3.1 A list including all streets found by the query is displayed;

1.2.1.3.2 The user selects one of the streets and clicks "go" to go to step 1.2.1.5;

1.2.1.4 The result of query 1.2.1.1 is to continue (the streets has been unequivocally found) ;

1.2.1.5 Script "result.phtml" is loaded. It checks whether a street has been selected in the preceding page;

1.2.1.6 The street has been selected:

1.2.1.6.1 The geographic (Lat-Lon) co-ordinates associated to the selected street are stored (co-ordinates correspond to the centroid of the street) ;

1.2.1.6.2 A query directed to all items having properties depending on the selected engine is executed (for example, "Search a Name" will look for the items with that Name, see above) checking that the item is within the selected radius from the starting point. This check is made by calculating the distance between the starting point and the position of the item and taking only those items that are at a distance lower than or equal to the input radius;

1.2.1.6.3 The result of the query of step 1.2.1.6.2 is a number of items $\geq$ 1:

1.2.1.6.3.1 The results put in order by distances from the starting point are shown in table form;

1.2.1.6.4 The result of the query of step 1.2.1.6.2 is zero item:

1.2.1.6.4.1 A message: "Attention no item found" is displayed;

1.2.1.7 The street has not been selected:

1.2.1.7.1 A fault message "Select the street" appears and the program return to step 1.2.1.3.1;

1.2.2 One of the two fields does not include at least one character:

1.2.2.1 A fault message "Input address and radius" appears.

In order to check whether the found item falls within the requested radius, the distance between the starting point and the position of the item is calculated and only those items having a distance lower than or equal to the input radius are selected. In the disclosed embodiment such distance is:

$$R \ = \ 1112,0 * \sqrt{\left[100\left(lat\_e - lat\_p\right)\right]^2 + \left[100\left(lon\_e - lon\_p\right)\right]^2} \ * 0,5543$$

where:

Lat_p = Latitude of the starting point
Lon_p = Longitude of the starting point
Lat_e = Latitude of the item to be checked
Lon_e = Longitude of the item to be checked

The co-ordinates GIS are associated to each item. With reference to the block diagram of Figure 12 the "Standard" search engine has a pseudo code that can be summarized as follows:

1. Acquisition of the initialization parameters (address of the SQL machine storing the data bank, login of connection, any connection parameters); these parameters are defined as constants of the code;
2. The user selects the (Commercial/Service) data base in which the search has to be carried out;
3. Opening of the TCP/IP connection to the selected data base; if the connection function finds an error, a proper message is printed and the procedure is over;
4. The district of interest is input by the user;
5. The list of the tables (that coincides with the list of the Main Categories) included in the data bank is requested to the data base;
6. A menu including the list of step 5 is shown;
7. The user selects a Main Category from the list (that corresponds to the selection of a table because of the reciprocal correspondence between tables and Main Categories);
8. A SQL query is carried out to the data base so as to obtain all Secondary Categories corresponding to the selected Main Category, i.e. all of the items of the table corresponding to said Main Category;
9. If the number of the obtained items is greater than zero, it is continued, otherwise a message is printed and the program returns to step 7 (there are no Secondary Categories in the selected Main Category);
10. A menu consisting of the Category field of the items included in the list of step 8 is shown;
11. The user selects the desired Secondary Category;
12. A SQL query is carried out to the data base so as to obtain all Sub-Categories corresponding to the selected secondary category, i.e. all of the items of the table of step 7 having the result of step 11 as Secondary Category field;
13. If the number of the obtained items is greater than zero, it is continued, otherwise a message is printed and the program return to step 11 (there are no Sub-Categories in the selected Secondary Category);
14. A menu consisting of the Sub-Category field of the items included in the list of step 11 is shown;
15. The user selects the desired Sub-Category;
16. Starting street and maximum radius of the search are input by the user;
17. The "Radius Check" block is activated;
18. A button is provided for each item shown leading to the map collection: if the user clicks a button by mouse, a function of the Mapguide engine loads and displays the vectorial map having its centre at the co-ordinates (Lat, Lon) of the selected item with a zoom factor such as to display an area of about 500x500 metres, and with the selected item being surrounded by a circle.

The "Fast" search engine is shown in the block diagram of Figure 13 and has a pseudo code that can be summarized as follows:

1. Acquisition of the initialization parameters (address of the SQL machine storing the data bank, login of connection, any connection parameters); these parameters are defined as constants of the code;
2. The user selects the (Commercial/Service) data base in which the search has to be carried out;
3. Opening of the TCP/IP connection to the selected data base; if the connection function finds an error, a proper message is printed and the procedure is over;
4. The district of interest is input by the user;
5. The category of interest is input by the user;
6. Query of data base: all of the items whose Sub-Category field includes a sub-string input by the user as per step 5 are selected in the union-table of all the tables included in the data base;
7. If the number of the obtained items is greater than zero, it is continued, otherwise a message is printed and the program returns to step 5 (there are no items for the selected Sub-Category);
8. A menu consisting of the Sub-Category field of the items obtained from query 6 is shown;
9. The user selects the desired Sub-Category;
10. Starting street and maximum radius of the search are input by the user;
11. The "Radius Check" block is activated;
12. A button is provided for each item shown leading to the map collection: if the user clicks a button by mouse, a function of the Mapguide engine loads and displays the vectorial map having its centre at the co-ordinates (Lat, Lon) of the selected item with a zoom factor such as to display an area of about 500x500 metres, and with the selected item being surrounded by a circle.

The "Name" or "Article" or "Trade Name" search engine is shown in the block diagram of Figure 14 and has a pseudo code that can be summarized as follows:

1. Acquisition of the initialization parameters (address of the SQL machine storing the data bank, login of connection, any connection parameters); these parameters are defined as constants of the code;
2. The user selects the (Commercial/Service) data base in which the search has to be carried out;
3. Opening of the TCP/IP connection to the selected data base; if the connection function finds an error, a proper message is printed and the procedure is over;
4. The district of interest is input by the user;
5. The item to be sought (Name of the commercial concern/service) is input by the user;
6. Check-box "Maximum distance": if the user has enabled it, the Check-distance flag is actuated;
7. Check of the string of step 5: if it is empty, the program returns to step 5;
8. If the Check-distance flag is active:

   8.1 The user selects starting street and maximum radius of the search
   8.2 The "Radius Check" block is activated;
   8.3 Go to step 13;

9. Query of data base: all of the items whose Name or Article or Trade Name field includes a sub-string input by the user as per step 5 are selected in the union-table of all the tables included in the data base;
10. If the number of the obtained items is greater than zero, it is continued, otherwise a proper message is printed (there are no items for the selected name) ;
11. The results (list of the found items) are displayed in table form;
12. A button is provided for each item shown leading to the map collection: if the user clicks a button by mouse, a function of the Mapguide engine loads and displays the vectorial map having its centre at the co-ordinates (Lat, Lon) of the selected item with a zoom factor such as to display an area of about 500x500 metres, and with the selected item being surrounded by a circle.

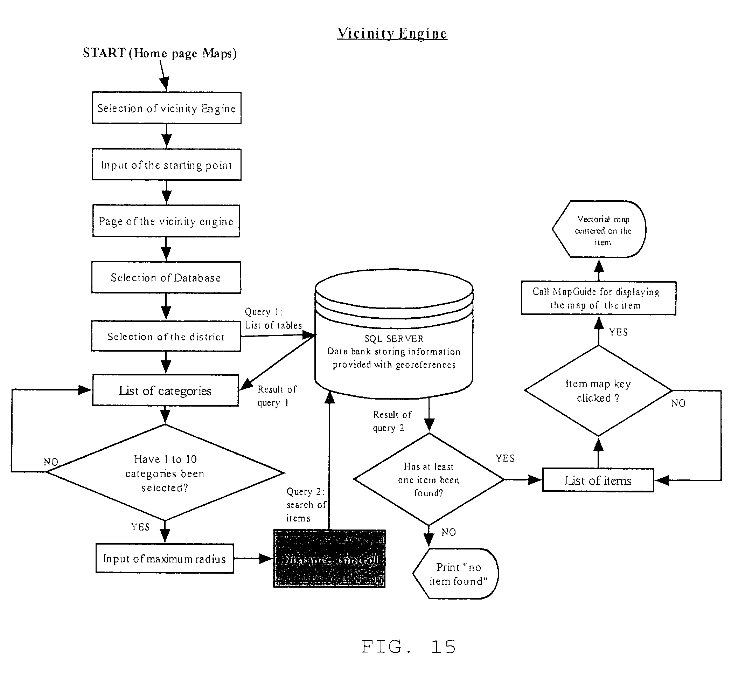

The "Vicinity" search engine is shown in the block diagram of Figure 15 and has a pseudo code that can be summarized as follows:

1. The user selects the search engine by vicinity from a menu of the home page of the map collection;
2. A pop-up message calls the user for selecting a point on the vectorial map by mouse;
3. Upon selecting that point, a function (getPoint) of the Mapguide engine is called for storing the co-ordinates (Lat, Lon) corresponding to the position of the mouse;
4. The page of the search engines is loaded through the user's interface of the vicinity engine;
5. Acquisition of the initialization parameters (address of the SQL machine storing the data bank, login of connection, any connection parameters) ; these parameters are defined as constants of the code;
6. The user selects the (Commercial/Service) data base in which the search has to be carried out;
7. Opening of the TCP/IP connection to the selected data base; if the connection function finds an error, a proper message is printed and the procedure is over;
8. The district of interest is input by the user;
9. The list of the tables (that coincides with the list of the Main Categories) included in the data bank is requested to the data base;
10. A menu including the list of step 5 is shown;
11. The user selects one or more Main Categories (max. 10) from the list (that corresponds to the selection of a table because of the reciprocal correspondence between tables and Main Categories);
12. The maximum radius within which the search has to be carried out is input by the user;
13. Query of data base: all of the items whose distance (radius) from the selected point (see step 3) is lower than or equal to the maximum radius (see step 12) are selected in the union-table of all the tables included in the data base and selected at step 12;
14. The results (list of the items found) are displayed in table form;
15. A button is provided for each item shown leading to the map collection: if the user clicks a button by mouse, a function of the Mapguide engine loads and displays the vectorial map having its centre at the co-ordinates (Lat, Lon) of the selected item with a zoom factor such as to display an area of about 500x500 metres, and with the selected item being surrounded by a circle.

It should be appreciated that the above-mentioned user may either be an individual who queries said data banks through an information retrieval or an automatic or semiautomatic apparatus that may ask information and/or supply the user therewith both for further processing and use.

In fact, as far as a query by mobile telephone systems (GSM, satellite systems, palm computers, car navigators, etc.) is concerned, the geographic starting position could be provided directly by the user or taken automatically by the mobile radio network with a precision which is enough to supply the above-described information.

For example, one can imagine that in case refuel is needed the car navigator informs the driver about the nearest gas station provided with the fuel he needs: gasoline, diesel oil, gas, etc.

Another possible application could be a "smart" mobile advertising system (a screen travelling on a truck) that changes the advertising pictures according to its positions and those of the users, for example, showing the picture of a commercial concern near its actual position.

It should be appreciated that the communication of the geographic position can advantageously be made directly by the user who can either provide it under the form of the name of a street or the geographic co-ordinates. This position may also be obtained automatically in different ways. For example, if the request of information comes from a cellular telephone, the Service Centre of the mobile telephone system is capable of identifying the area from which the user calls through the cell to which he is connected or by triangulation among several cells. If the look-up apparatus of the user is provided with a hand-held GPS apparatus, the user can directly receive the geographic co-ordinates.

Considering in greater detail the present invention applied to a mobile telephone apparatus, it should be appreciated that the interface of the user has to be simplified because of the lack of a graphic terminal (the present cellular telephones generally have an alphanumeric small-size display). Therefore, the access to the search engines takes place through a menu system using alphanumeric characters.

Once the user is connected to the service system, the display of his cellular telephone will show a Main Menu from which he can select the search to be carried out. To this end, it should be noted that the query of search engines through a cellular telephone in the above implementation requires that also such telephone implements the new communication protocol WAP (Wireless Application Protocol). This is a protocol which has so far been supported by the data transfer protocol of the GSM 900 MHz and 1800 MHz network in Europe (in USA there are other cellular digital protocols) but could afterwards supported by other data transmission standards.

WAP protocol can be seen as equivalent to the known communication protocol TCP/IP (Transport Control Protocol/Internet Protocol) for hand-held phones. The birth of WAP is due to the particular limitation relative to calculation power, memory capacity, data transmission rate of the hand-held peripheral apparatus such as cellular telephones, palm computers, car navigators, etc. in which the implementation of the TCP/IP protocol would be ineffective.

WAP protocol provides, among others, a proper programming language HDML or WML (Wireless Markup Language). These programming languages are essentially comparable with the known HTML language used for the interactive pages of the Internet www sites. Thus, it is possible to provide interactive pages that can be used directly by cellular telephones by using such HDML or WML language. Therefore, suitable interactive pages in HDML or WML language for driving the search engines described above are provided on a WAP compatible server connected to the network of a cellular telephone operator. The retrieval is carried out by the known interface CGI (Common Gateway Interface) widely used for www sites.

Some important manufacturers of cellular telephones have already put on the market the first cellular telephones compatible with WAP protocol.

A simplified implementation other than that previously described for the application to a graphic terminal is disclosed herebelow. In particular, two search modes have been provided in the described example: a Search Engine by Shows similar to that already described for the search by Trade Name, and a Search Engine by Category similar to the Standard Engine previously described for Internet/PC implementations. At any rate, however, five of the six previously described engines (except for the Engine by Vicinity that requires the use of the map collection and then a graphic interface) can also be implemented for their looking-up through cellular telephone.

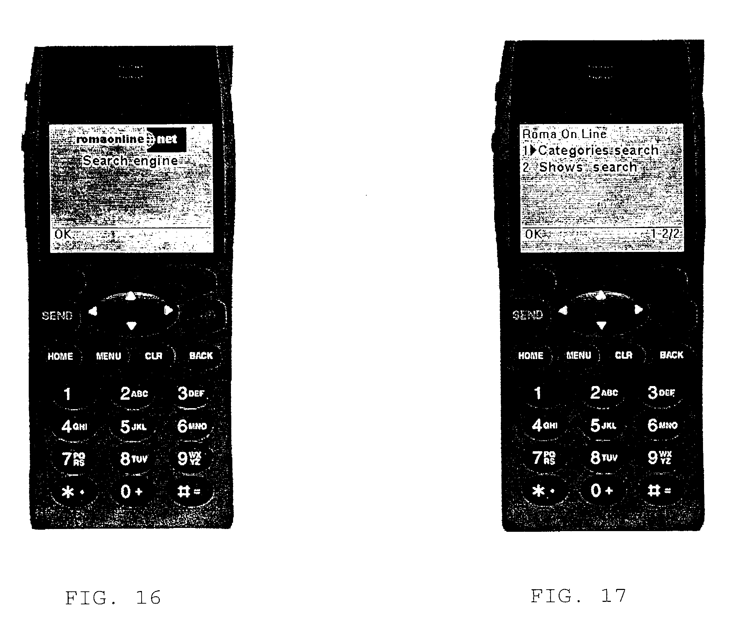

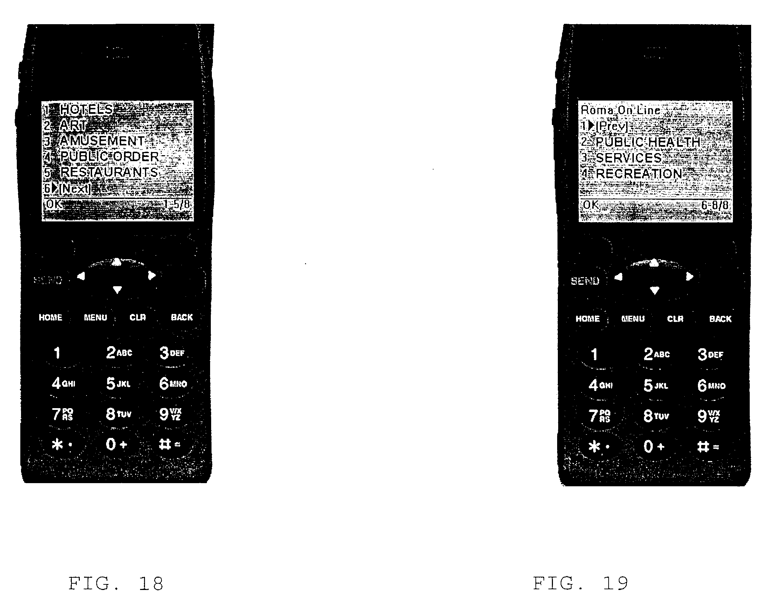

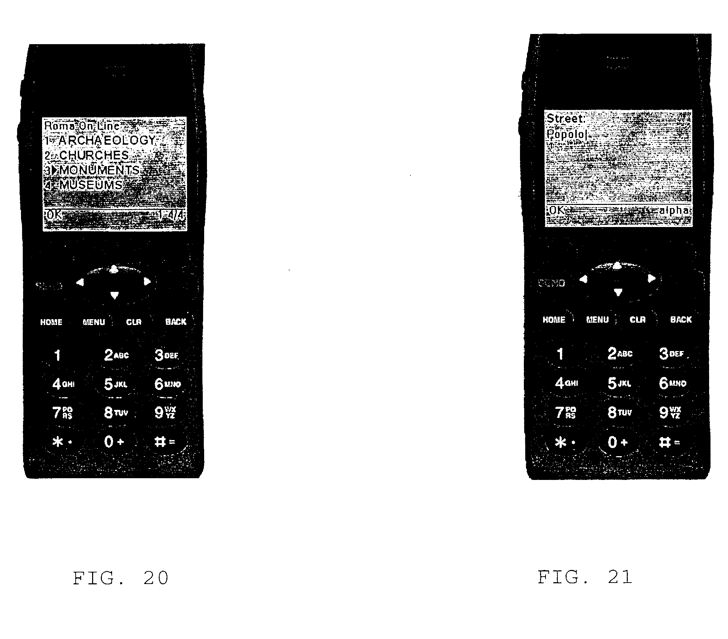

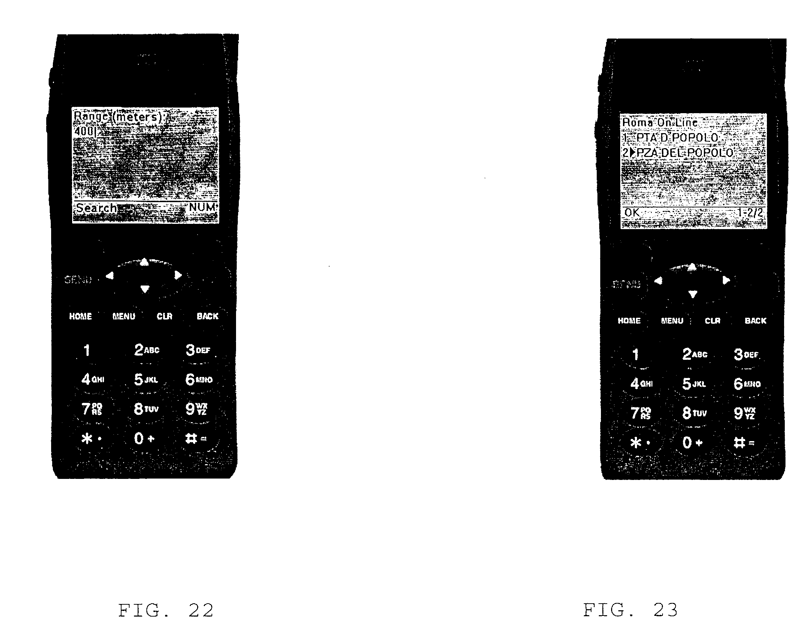

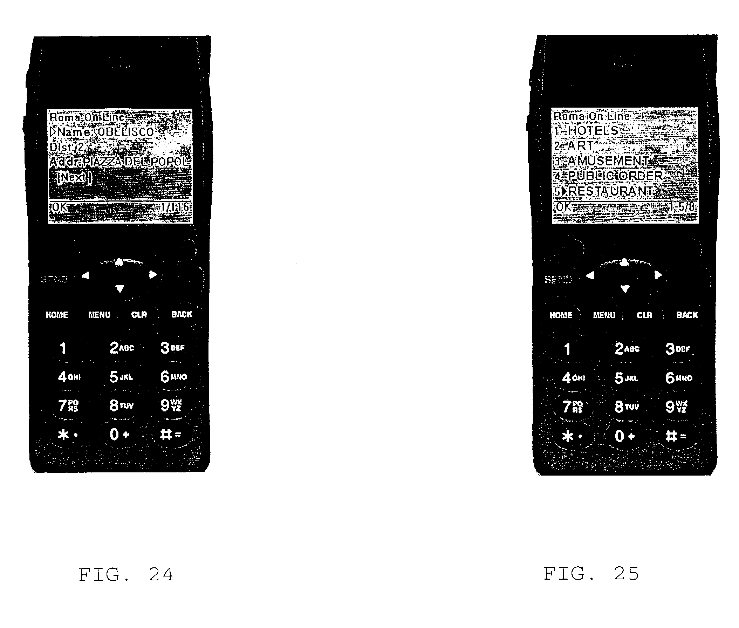

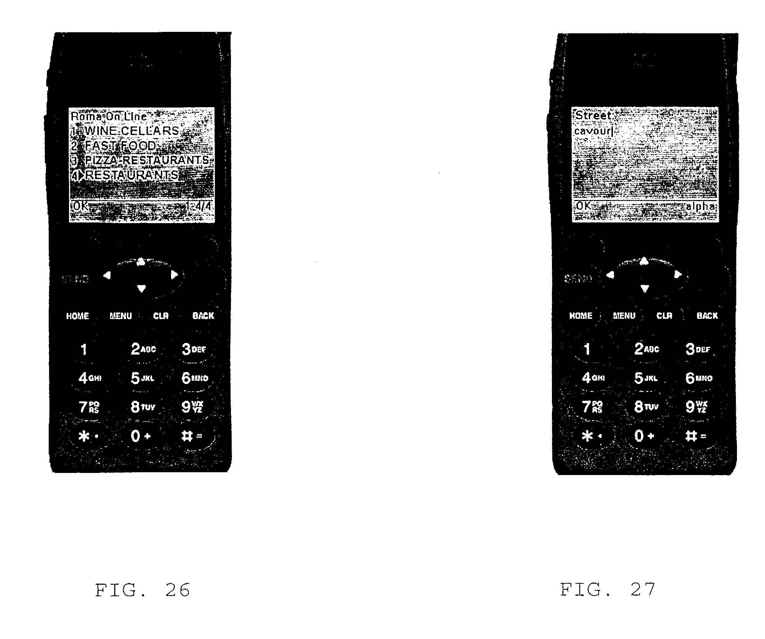

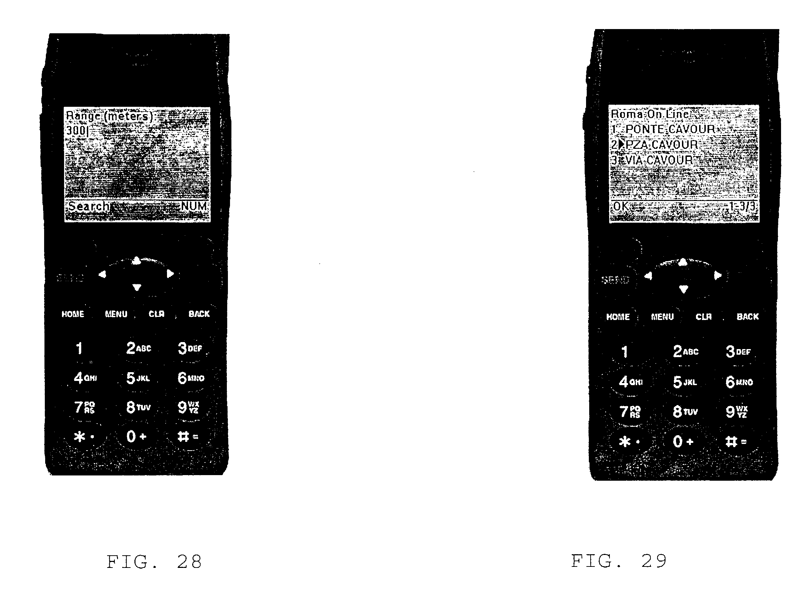

With particular reference to Figures 16 to 30, the user will first select the category of interest in a menu of the engine by category, an item of such menu being selected by the keys of the cellular telephone. A further menu with the Sub-Categories of the selected Main Category is then displayed. Advantageously, such menu will be distributed automatically on several pages in case it is too long to be shown on the display of the cellular telephone.

After having selected the Sub-Category by the same way described above, the user is requested to write the name of the street as starting point (the name of the street is written by the alphanumeric keyboard of the cellular telephone) and the maximum radius of interest. It should be remembered, however, that the bearing of the starting position could be automatically taken.

If there is at least one item with the requested characteristics, the result of the search will be a display of a brief information sheet relative to the nearest item with respect to the specified starting point or a fault message, if there are no items. Also in this case the information sheet will be distributed automatically on several pages if it is too long to be shown on the display of the cellular telephone.

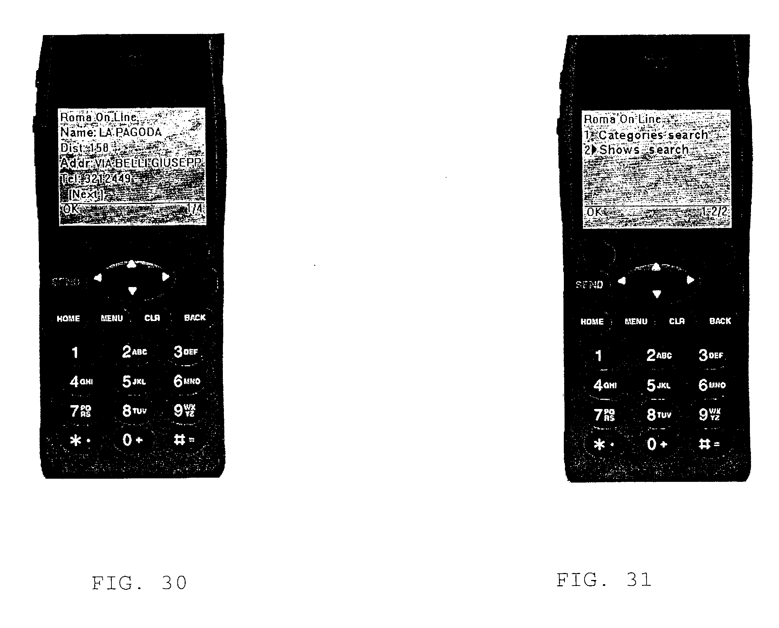

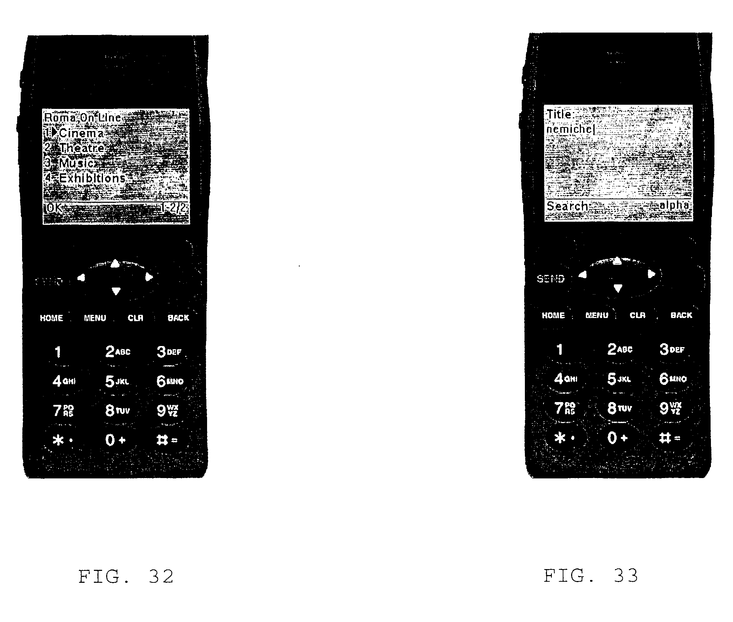

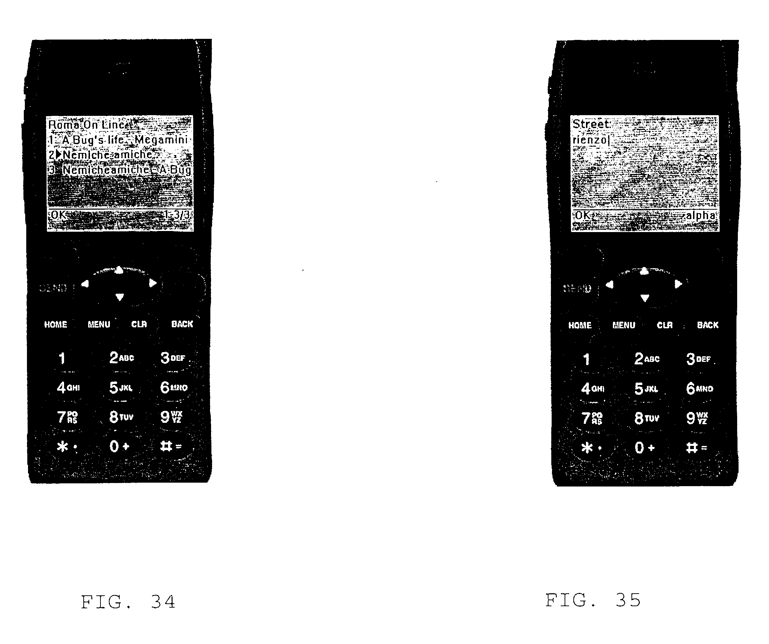

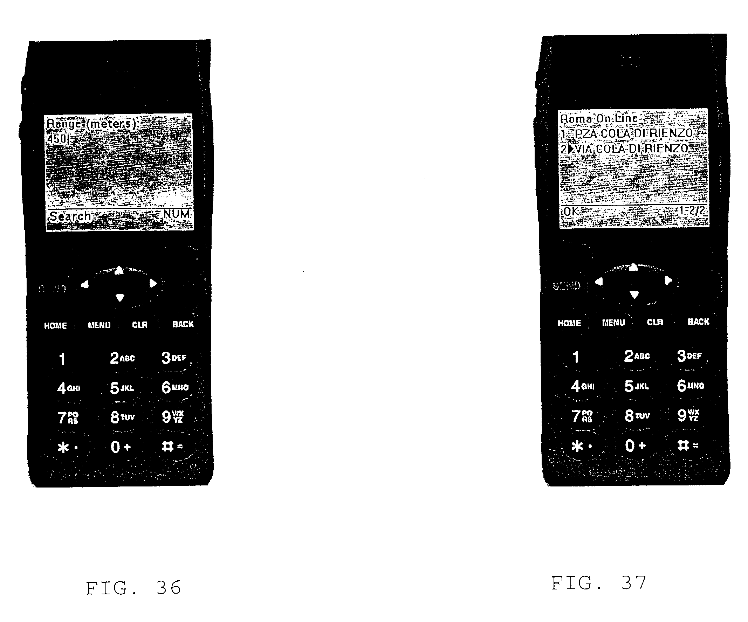

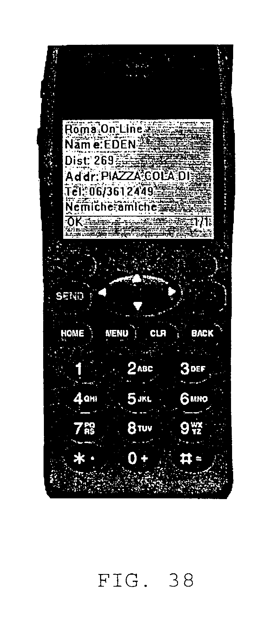

With reference to the Figures 31 to 38 the user will select the item of interest in a menu of the search engine by shows (in the present implementation cinema, theatres, concert-halls, exhibitions), whereupon he selects the requested Title or a part thereof (sub-string) and the street as starting point. The system will give the nearest hall playing the requested show or a fault message if there are no items.

Also in this case, of course, the information sheet will be distributed automatically on several pages if it is too long to be shown on the display of the cellular telephone.

It is self-evident from what described above that the problem of the interface with alphanumeric characters is overcome if the hand-held telephone has a graphic interface or in case a hand-held personal computer provided with modem card is used.

The present invention has been described and illustrated according to preferred embodiments thereof, however, it should be understood that those skilled in the art can conceive other applications without departing from the scope of the present industrial invention.

**Claims**

1. A method of looking up data banks by one or more search engines and its selection according to information provided by the user, characterized in that there are provided in combination the use of one or more data banks containing records relative to commercial concerns and/or services, and a vectorial topographical map provided with georeferences and interfaced with said data banks to carry out searches in said data banks according to data items input by the user and/or the distance from a geographic position either input by the same user or automatically detected, each record of said data banks being provided with geographic references able to determine the position all over land.

2. The method of claim 1, characterized in that the look-up is carried out by personal computer or remote terminal connected to an information system for the access to a data base and a vectorial map collection, the input/output of any search or query being provided by the use of one window (F) divided into section or areas.

3. The method of claim 2, characterized in that the following main sections for data exchange between user and information system are included in the window (F) of the engine(s) :

   - section of the engine to be used (1);
   - section of the data base to be queried (2) ;
   - section of the selected engine (3) ;
   - section Help (4);
   - section for showing the result (5) ;
   - section of advertising banners (6).

4. The method of claims 2 and 3, characterized in that the dimension of window (F) are such as to allow the user to actuate the engine and to see the vectorial map on the background changing according to the requests.

5. The method of the preceding claims, characterized in that the connection for data exchange between search engines and data base is established by interface libraries API (Application Program Interface) in C language, and the connection between the vectorial map collection and data base is established by means of ODBC technology.

6. The method of claim 5, characterized in that both (Commercial and Service) data bases consists of tables in which multicolumn indexes have been implemented for increasing the efficiency of engines and maps.

7. The method of the preceding claims, characterized in that said search engines are six and perform searches of the following types:

   - search by name with and without distance restraint;
   - search by trade names with and without distance restraint;
   - search by articles with and without distance restraint;
   - search by vicinity;
   - standard search;
   - fast search.

8. The method of the preceding claims, characterized in that said geographic references are geographic co-ordinates (Latitude and Longitude) and/or road addresses that can be led to geographic co-ordinates by known mathematical calculations.

9.  The method of the preceding claims, characterized in that the distance from the geographic position input by the user or taken automatically is expressed as distance to be covered or distance as the crow flies or maximum radius.

10. The method of the preceding claims, characterized in that the procedure of controlling the maximum radius or distance from the starting point input by the user is started after the parameters of the engines have been input and includes the following steps:

    1. The script PHP "address.phtml" is executed so that the user can write street and radius transferring thereto the values strictly depending on the selected engine (such values are transferred to all of the scripts including the script for printing the results) ;

    1.1 Once data is input and "go" clicked, data is sent to a new script: "address_result.phtml";
    1.2 This script first checks whether at least one character has been input into proper spaces for address and maximum radius;

        1.2.1 At least one character is present in both fields:

            1.2.1.1 A query is executed to the table including the information of the road-map in the Database Server asking all streets having the string written in the address space of the Name field;
            1.2.1.2 The query of item 1.2.1.1 gives zero items as result:
                1.2.1.2.1 A fault message "Street not included in the road map" appears and program returns to step 1;
            1.2.1.3 The result of query 1.2.1.1 gives a number of items greater than 1 as result (there is more than one item with the same name):

                1.2.1.3.1 A list including all streets found by the query is displayed;
                1.2.1.3.2 The user selects one of the streets and clicks "go" to go to step 1.2.1.5;

            1.2.1.4 The result of query 1.2.1.1 is to continue (the streets has been unequivocally found) ;
            1.2.1.5 Script "result.phtml" is loaded. It checks whether a street has been selected in the preceding page;
            1.2.1.6 The street has been selected:

                1.2.1.6.1 The geographic (Lat-Lon) co-ordinates associated to the selected street are stored (co-ordinates correspond to the centroid of the street) ;
                1.2.1.6.2 A query directed to all items having properties depending on the selected engine is executed (for example, "Search a Name" will look for the items with that Name, see above) checking that the item is within the selected radius from the starting point. This check is made by calculating the distance between the starting point and the position of the item and taking only those items that are at a distance lower than or equal to the input radius;
            1.2.1.6.3 The result of the query of step 1.2.1.6.2 is a number of items ≥ 1:
                1.2.1.6.3.1 The results put in order by distances from the starting point are shown in table form;
            1.2.1.6.4 The result of the query of step 1.2.1.6.2 is zero item:
            1.2.1.6.4.1 A message: "Attention no item found" is displayed;

            1.2.1.7 The street has not been selected:
                1.2.1.7.1 A fault message "Select the street" appears and the program return to step 1.2.1.3.1;

        1.2.2 One of the two fields does not include at least one character:
            1.2.2.1 A fault message "Input address and radius" appears.

11. The method of the preceding claims, characterized in that in order to check whether all of the found items fall within the requested radius, the distance between the starting point and the position of the item is calculated, and only those items having a distance lower than or equal to the input radius are selected, such distance being:

$$R = 1112,0 * \sqrt{\left[100(lat\_e - lat\_p)\right]^2 + \left[100(lon\_e - lon\_p)\right]^2} * 0,5543$$

where:

Lat_p = Latitude of the starting point
Lon_p = Longitude of the starting point
Lat_e = Latitude of the item to be checked
Lon_e = Longitude of the item to be checked

**12.** The method of the preceding claims, characterized in that the "Standard" search engine has a pseudo code including the following steps:

1. Acquisition of the initialization parameters (address of the SQL machine storing the data bank, login of connection, any connection parameters); these parameters are defined as constants of the code;
2. The user selects the (Commercial/Service) data base in which the search has to be carried out;
3. Opening of the TCP/IP connection to the selected data base; if the connection function finds an error, a proper message is printed and the procedure is over;
4. The district of interest is input by the user;
5. The list of the tables (that coincides with the list of the Main Categories) included in the data bank is requested to the data base;
6. A menu including the list of step 5 is shown;
7. The user selects a Main Category from the list (that corresponds to the selection of a table because of the reciprocal correspondence between tables and Main Categories);
8. A SQL query is carried out to the data base so as to obtain all Secondary Categories corresponding to the selected Main Category, i.e. all of the items of the table corresponding to said Main Category;
9. If the number of the obtained items is greater than zero, it is continued, otherwise a message is printed and the program returns to step 7 (there are no Secondary Categories in the selected Main Category);
10. A menu consisting of the Category field of the items included in the list of step 8 is shown;
11. The user selects the desired Secondary Category;
12. A SQL query is carried out to the data base so as to obtain all Sub-Categories corresponding to the selected secondary category, i.e. all of the items of the table of step 7 having the result of step 11 as Secondary Category field;
13. If the number of the obtained items is greater than zero, it is continued, otherwise a message is printed and the program return to step 11 (there are no Sub-Categories in the selected Secondary Category);
14. A menu consisting of the Sub-Category field of the items included in the list of step 11 is shown;
15. The user selects the desired Sub-Category;
16. Starting street and maximum radius of the search are input by the user;
17. The "Radius Check" block is activated;
18. A button is provided for each item shown leading to the map collection: if the user clicks a button by mouse, a function of the Mapguide engine loads and displays the vectorial map having its centre at the co-ordinates (Lat, Lon) of the selected item with a zoom factor such as to display an area of about 500x500 metres, and with the selected item being surrounded by a circle.

**13.** The method of the preceding claims, characterized in that the "Fast" search engine has a pseudo code with the following steps:

1. Acquisition of the initialization parameters (address of the SQL machine storing the data bank, login of connection, any connection parameters); these parameters are defined as constants of the code;
2. The user selects the (Commercial/Service) data base in which the search has to be carried out;
3. Opening of the TCP/IP connection to the selected data base; if the connection function finds an error, a proper message is printed and the procedure is over;
4. The district of interest is input by the user;
5. The category of interest is input by the user;
6. Query of data base: all of the items whose Sub-Category field includes a sub-string input by the user as per step 5 are selected in the union-table of all the tables included in the data base;
7. If the number of the obtained items is greater than zero, it is continued, otherwise a message is printed and the program returns to step 5 (there are no items for the selected Sub-Category);
8. A menu consisting of the Sub-Category field of the items obtained from query 6 is shown;
9. The user selects the desired Sub-Category;
10. Starting street and maximum radius of the search are input by the user;

11. The "Radius Check" block is activated;

12. A button is provided for each item shown leading to the map collection: if the user clicks a button by mouse, a function of the Mapguide engine loads and displays the vectorial map having its centre at the co-ordinates (Lat, Lon) of the selected item with a zoom factor such as to display an area of about 500x500 metres, and with the selected item being surrounded by a circle.

14. The method of the preceding claims, characterized in that the "Name" or "Article" or "Trade Name" search engine has a pseudo code including the following steps:

1. Acquisition of the initialization parameters (address of the SQL machine storing the data bank, login of connection, any connection parameters); these parameters are defined as constants of the code;

2. The user selects the (Commercial/Service) data base in which the search has to be carried out;

3. Opening of the TCP/IP connection to the selected data base; if the connection function finds an error, a proper message is printed and the procedure is over;

4. The district of interest is input by the user;

5. The item to be sought (Name of the commercial concern/service) is input by the user;

6. Check-box "Maximum distance": if the user has enabled it, the Check-distance flag is actuated;

7. Check of the string of step 5: if it is empty, the program returns to step 5;

8. If the Check-distance flag is active:

8.1 The user selects starting street and maximum radius of the search
8.2 The "Radius Check" block is activated;
8.3 Go to step 13;

9. Query of data base: all of the items whose Name or Article or Trade Name field includes a sub-string input by the user as per step 5 are selected in the union-table of all the tables included in the data base;

10. If the number of the obtained items is greater than zero, it is continued, otherwise a proper message is printed (there are no items for the selected name) ;

11. The results (list of the found items) are displayed in table form;

12. A button is provided for each item shown leading to the map collection: if the user clicks a button by mouse, a function of the Mapguide engine loads and displays the vectorial map having its centre at the co-ordinates (Lat, Lon) of the selected item with a zoom factor such as to display an area of about 500x500 metres, and with the selected item being surrounded by a circle.

15. The method of the preceding claims, characterized in that the "Vicinity" search engine has a pseudo code including the following steps:

1. The user selects the search engine by vicinity from a menu of the home page of the map collection;

2. A pop-up message calls the user for selecting a point on the vectorial map by mouse;

3. Upon selecting that point, a function (getPoint) of the Mapguide engine is called for storing the co-ordinates (Lat, Lon) corresponding to the position of the mouse;

4. The page of the search engines is loaded through the user's interface of the vicinity engine;

5. Acquisition of the initialization parameters (address of the SQL machine storing the data bank, login of connection, any connection parameters); these parameters are defined as constants of the code;

6. The user selects the (Commercial/Service) data base in which the search has to be carried out;

7. Opening of the TCP/IP connection to the selected data base; if the connection function finds an error, a proper message is printed and the procedure is over;

8. The district of interest is input by the user;

9. The list of the tables (that coincides with the list of the Main Categories) included in the data bank is requested to the data base;

10. A menu including the list of step 5 is shown;

11. The user selects one or more Main Categories (max. 10) from the list (that corresponds to the selection of a table because of the reciprocal correspondence between tables and Main Categories);

12. The maximum radius within which the search has to be carried out is input by the user;

13. Query of data base: all of the items whose distance (radius) from the selected point (see step 3) is lower than or equal to the maximum radius (see step 12) are selected in the union-table of all the tables included in the data base and selected at step 12;

14. The results (list of the items found) are displayed in table form;

15. A button is provided for each item shown leading to the map collection: if the user clicks a button by mouse, a function of the Mapguide engine loads and displays the vectorial map having its centre at the co-ordinates (Lat, Lon) of the selected item with a zoom factor such as to display an area of about 500x500 metres, and with the selected item being surrounded by a circle.

**16.** The method of the preceding claims, characterized in that in case the looking up of the data base is made by a cellular telephone provided with an alphanumeric display and connected to the information system for the access to the data base and the vectorial map collection, the input/output of searches and queries is performed by a simplified system with menu having alphanumeric characters.

**17.** The method of claim 16, characterized in that said cellular telephone is compatible with the WAP (Wireless Application Protocol) communication protocol.

FIG. 1

FIG. 2

FIG. 3

11)

FIG. 4

12)

FIG. 5

FIG. 6

FIG. 7

FIG. 8

FIG. 9

FIG. 10

# Distance Control

SQL SERVER
Data bank storing information provided with
georeferences (Latitude, Longitude).

Input of starting street
for the search.

Input of the radius in meters
within which the search has
to be performed.

Launch of search
procedure.

1) Query of Street-guide

Start of the procedure Input of starting point and radius

Result of Query 1)

NO — Is the number of
streets corresponding
to the requested street
greater than 0 ? — YES

YES — Is the
number of
streets
greater than
1 ? — NO

Display of a list of all
possible streets.

Selection of the right
street and launch of
the procedure.

Taking of the geographic
references of the
requested street.

INPUT
Parameters depending
on the selected engine.

Preparation of the query for the
search. The query depends not only
on the starting street but also on the
selected engine. (e.g.: Search by
Name, Article, Trade-mark,
Category, ...)

2) Query : Search of the requested items within the selected radius put in order according to the distance from the starting point.

Display of an error message.

NO

Result of Query 2 — Does the result
include at least
one item ? — YES — Showing of the result in table form with
all items put in order by distances from
the starting point.

FIG. 11

START

Standard search engine

Selection of DB for searching.

Selection of the district.

Selection of the main category.

SQL SERVER
Data bank storing information provided with georeferences (Latitude,, Longitude).

1) Query : Selection of all secondary categories of the main category.

Result of query 1).

There are no items with the selected main category.

NO

Is there at least one secondary category of the main category?

YES

Print of the result, if found, or display of the message "No item found".

Selection of the secondary category.

2) Query : Selection of all sub-categories of the secondary category.

Result of query 2).

There are no items with the selected secondary category.

Connection to DB Romaonline

Distance Control

NO

Is there at least one sub-category of the secondary category?

YES

Selection of the sub-category.

Start of the request of street, radius and range of the sub-category to be searched.

FIG. 12

FIG. 13

Search engine by Name

Selection of DB for searching.

Selection of the district

Input of the item to be searched

Enable the key "Maximum distance" if requested

Does the inputted item include at least one character ?

NO

YES

Is the check box for the "Maximum distance" enabled?

YES

NO

Start of the request of street, radius and range of the engine parameters.

Distance control

2) Connection to SQL Server

1) Query : Selection of all items in the selected DB having in their names the requested item put in order by name.

SQL SERVER

Data bank storing information provided with georeferences (Latitude, Longitude).

Result of query 1).

Print of the result, if found, or display of the message "No item found".

FIG. 14

## Vicinity Engine

START (Home page Maps)

FIG. 15

FIG. 17

FIG. 16

FIG. 19

FIG. 18

FIG. 21

FIG. 20

FIG. 23

FIG. 22

FIG. 25

FIG. 24

FIG. 27

FIG. 26

EP 1 045 345 A1

FIG. 28

FIG. 29

FIG. 31

FIG. 30

FIG. 33

FIG. 32

FIG. 35

FIG. 34

FIG. 36

FIG. 37

FIG. 38

**European Patent Office**

**EUROPEAN SEARCH REPORT**

Application Number

EP 99 10 7016

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 97 07467 A (PHELAN SEAN) 27 February 1997 (1997-02-27) * page 9, line 6 - line 34; figure 3 * --- | 1,2,8 | G06T17/50 |
| X | WO 97 48065 A (DELORME PUBLISHING COMPANY INC) 18 December 1997 (1997-12-18) * abstract; figure 1 * * page 11, line 19 - line 28 * --- | 1,8 | |
| X | US 5 806 018 A (HARRINGTON MARK F ET AL) 8 September 1998 (1998-09-08) * abstract * * column 10, line 27 - line 34 * --- | 1,7 | |
| X | EP 0 795 835 A (TOYOTA MOTOR CO LTD) 17 September 1997 (1997-09-17) * column 9, line 10 - line 42; figure 13 * --- | 1-4,7 | |
| X | WO 96 07110 A (MANNINGS ROBIN THOMAS ;BRITISH TELECOMM (GB); WALL NIGEL DAVID CHA) 7 March 1996 (1996-03-07) * abstract; figure 1 * * page 21, line 29 - page 22, line 11 * --- | 1,16,17 | TECHNICAL FIELDS SEARCHED (Int.Cl.7) |
| X | KUNIHIRO ISHIKAWA ET AL: "MAP NAVIGATION SOFTWARE OF THE ELECTRO-MULTIVISION OF THE '91 TOYOTA SOARER" PROCEEDINGS OF THE VEHICLE NAVIGATION AND INFORMATION SYSTEMS CONFERENCE, DEARBORN, OCT. 20 - 23, 1991, vol. 1, 20 October 1991 (1991-10-20), pages 463-473, XP000347114 INSTITUTE OF ELECTRICAL AND ELECTRONICS ENGINEERS ISBN: 0-7803-0488-8 * page 470, left-hand column, line 17 - page 473, left-hand column, line 8; figures 10-17 * --- -/-- | 1 | G06T G01C G06F |

The present search report has been drawn up for all claims

| Place of search | Date of completion of the search | Examiner |
|---|---|---|
| BERLIN | 22 September 1999 | Deane, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 045 345 A1

**European Patent Office**

**EUROPEAN SEARCH REPORT**

Application Number

EP 99 10 7016

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 784 296 A (SONY CORP) 16 July 1997 (1997-07-16) | 1-4 | |
| A | * page 4, line 21 - line 35; figures 3A,3B,4A,4B * | 7,8,14 | |
| | ----- | | |
| | | | **TECHNICAL FIELDS SEARCHED** (Int.Cl.7) |

The present search report has been drawn up for all claims

| Place of search | Date of completion of the search | Examiner |
|---|---|---|
| BERLIN | 22 September 1999 | Deane, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 99 10 7016

This annex lists the patent family members relating to the patent documents cited in the above-mentioned European search report.
The members are as contained in the European Patent Office EDP file on
The European Patent Office is in no way liable for these particulars which are merely given for the purpose of information.

22-09-1999

| Patent document cited in search report | | Publication date | Patent family member(s) | | Publication date |
|---|---|---|---|---|---|
| WO 9707467 | A | 27-02-1997 | AU | 708387 B | 05-08-1999 |
| | | | AU | 6749496 A | 12-03-1997 |
| | | | CA | 2229733 A | 27-02-1997 |
| | | | EP | 0845124 A | 03-06-1998 |
| WO 9748065 | A | 18-12-1997 | US | 5802492 A | 01-09-1998 |
| US 5806018 | A | 08-09-1998 | US | 5327066 A | 05-07-1994 |
| | | | AU | 674763 B | 09-01-1997 |
| | | | AU | 6988694 A | 20-12-1994 |
| | | | CA | 2163200 A | 08-12-1994 |
| | | | GB | 2293904 A,B | 10-04-1996 |
| | | | GB | 2310305 A,B | 20-08-1997 |
| | | | WO | 9428526 A | 08-12-1994 |
| | | | US | 5914654 A | 22-06-1999 |
| | | | US | 5422624 A | 06-06-1995 |
| | | | US | 5742229 A | 21-04-1998 |
| | | | US | 5499181 A | 12-03-1996 |
| | | | US | 5717374 A | 10-02-1998 |
| EP 0795835 | A | 17-09-1997 | AU | 685345 B | 15-01-1998 |
| | | | AU | 4474296 A | 19-06-1996 |
| | | | CA | 2206896 A | 06-06-1996 |
| | | | CN | 1160445 A | 24-09-1997 |
| | | | WO | 9617315 A | 06-06-1996 |
| WO 9607110 | A | 07-03-1996 | AU | 684228 B | 04-12-1997 |
| | | | AU | 3393195 A | 22-03-1996 |
| | | | AU | 695816 B | 20-08-1998 |
| | | | AU | 5538998 A | 23-04-1998 |
| | | | CA | 2198886 A | 07-03-1996 |
| | | | DE | 69506563 D | 21-01-1999 |
| | | | DE | 69506563 T | 06-05-1999 |
| | | | EP | 0777863 A | 11-06-1997 |
| | | | EP | 0837341 A | 22-04-1998 |
| | | | ES | 2126931 T | 01-04-1999 |
| | | | FI | 970848 A | 28-02-1997 |
| | | | JP | 10505420 T | 26-05-1998 |
| | | | NO | 970940 A | 28-02-1997 |
| | | | NZ | 292210 A | 28-07-1998 |
| | | | NZ | 329889 A | 28-05-1999 |
| EP 0784296 | A | 16-07-1997 | AU | 1011097 A | 17-07-1997 |
| | | | JP | 9311873 A | 02-12-1997 |

EPO FORM P0459

For more details about this annex : see Official Journal of the European Patent Office, No. 12/82